# EUROPÄISCHE PATENTSCHRIFT

(11) **EP 1 151 260 B1**
(45) Veröffentlichungstag und Bekanntmachung des Hinweises auf die Patenterteilung: **02.01.2004**
(21) Anmeldenummer: 00904903.2
(22) Anmeldetag: 13.01.2000
(51) Int. Cl.: G01L 1/24, G01B 11/16, G01M 11/08

(54) **VORRICHTUNG ZUR BESTIMMUNG DER BIEGEBEANSPRUCHUNG VON BAUTEILEN**
DEVICE FOR DETERMINING THE BENDING STRESS OF COMPONENTS
DISPOSITIF POUR DETERMINER LA CONTRAINTE DE FLEXION D'ELEMENTS CONSTITUTIFS

(30) Priorität: 11.02.1999 DE 19905687
(43) Veröffentlichungstag der Anmeldung: 07.11.2001
(73) Patentinhaber: HALFEN GmbH & CO. Kommanditgesellschaft, 40764 Langenfeld-Richrath (DE)
(72) Erfinder: ERNST, Peter, D-65795 Hattersheim (DE); HACK, Axel, D-64289 Darmstadt (DE); INAUDI, Daniele, Ph.D.Phys., 6916 Grancia (CH)
(74) Vertreter: Riedel, Peter, Dipl.-Ing.
(86) Internationale Anmeldenummer: PCT/EP2000/000183
(87) Internationale Veröffentlichungsnummer: WO 2000/047966

(56) Entgegenhaltungen:
- EP-A- 0 025 815
- EP-A- 0 404 242
- WO-A-97/42463
- US-A- 5 026 141

## Beschreibung

Die Erfindung betrifft eine Messeinrichtung zur Bestimmung einer Biegebeanspruchung sowie die Verwendung der Messeinrichtung zur Bestimmung der Biegebeanspruchung.

Die Biegebeanspruchung von Bauteilen kann durch Dehnungsmessungen in der Biegezugzone und in der Biegedruckzone von auf Biegung beanspruchten Bauteilen erfolgen. Hierzu ist es bekannt, als Dehnungsmeßelemente Dehnungsmeßstreifen am Bauteil anzubringen und die elektrische Widerstandsänderung zur Ermittlung der Dehnung heranzuziehen.

Für Messungen, die über einen längeren Zeitraum bis hin zur gesamten Lebensdauer des Bauteils oder in größeren zeitlichen Abständen durchgeführt werden sollen, wie dies üblicherweise bei der Überwachung von Bauwerken der Fall ist, sind Dehnungsmeßstreifen jedoch wenig geeignet, weil sie für den Einsatz auf Baustellen zu empfindlich sind und weil über längere Zeiträume hinweg der Nullpunkt nicht konstant bleibt. Dadurch wird die Messung wesentlich erschwert, insbesondere für die Zwecke der dauernden Überwachung von Bauwerken.

Die Messung der Vorspannkraft der Zugstäbe in Zugstabsystemen im Bauwesen erfolgt bisher üblicherweise durch die Bestimmung des Anzugsmoments der Schraubenverbindung mit den angeschlossenen Gabelstücken. Wegen der unterschiedlichen Reibungsverhältnisse in den Verschraubungen ist es jedoch nicht möglich, aus dem gemessenen Schraubenanzugsmoment mit ausreichender Genauigkeit auf die Vorspannkraft in den Zugstäben zu schließen. In der Praxis treten hierbei sehr große Schwankungen auf.

Für die Überwachung der Beanspruchung von größeren Bauteilen, insbesondere auch ganzen Bauwerken, ist die Anwendung von Lichtwellenleitern bekannt (DE-A-19 601 968). Diese Sensoren werden beispielsweise in Form von längeren Rohren in Betonkörpern eingegossen, um deren Dehnung zu messen. Die hierfür verwendeten Lichtwellenleiter weisen zwei nebeneinander verlegte Fasern auf. Eine Meßfaser ist an dem zu überwachenden Bauteil mechanisch befestigt und führt dieselben Längenänderungen aus wie das Bauteil. Eine Referenzfaser ist im selben Rohr parallel zur Meßfaser frei installiert. Von einer Lichtquelle wird Licht durch einen Koppler in beide Fasern übertragen. Ein am Ende jeder Faser montierter Spiegel reflektiert das Licht in den Koppler zurück, der mit der Auswerteschaltung verbunden ist.

Diese Lichtwellenleiter sind jedoch zur Anbringung an verhältnismäßig kleinen Bauteilen nicht geeignet, die keine Einbettung des die beiden Fasern enthaltenden Rohres ermöglichen.

Es ist bekannt (US-A-5 026 141), im Bauwesen zur Überwachung von Bauteilen, wie Pipelines, Bohrplattformen, Brücken, Gebäuden, Dämmen oder dgl. eine Meßeinrichtung einzusetzen, bei der an einem großformatigen Bauteil, beispielsweise einer Rohrleitung, in der Biegezugzone und der Biegedruckzone des Bauteils jeweils Lichtwellenleiter angebracht werden, die mit einer Lichtquelle und einer Auswerteschaltung verbunden sind, in der die bei einer Biegebeanspruchung des Bauteils auftretenden entgegengesetzten Längenänderungen der beiden Lichtwellenleiter nach dem Prinzip der Interferometrie ermittelt werden.

Auch bei einer anderen bekannten Vorrichtung (EP-A-0 404 242) ist die Verwendung einer Meßeinrichtung bekannt, bei der zur Bestimmung der Biegebeanspruchung von Bauteilen in der Biegezugzone und in der Biegedruckzone des Bauteils jeweils Lichtwellenleiter entlang dem zu überwachenden Bauteil angebracht sind, die über einen Koppler mit einer Lichtquelle und einer Auswerteschaltung verbunden sind. Dort werden die bei der Biegebeanspruchung des Bauteils auftretenden entgegengesetzten Längenänderungen der beiden Lichtwellenleiter nach dem Prinzip der Interferometrie ermittelt.

Schließlich ist es bekannt (WO 97 42463 A) , die Biegebeanspruchung von Bauwerken oder Bauwerksteilen durch eine Meßeinrichtung zu erfassen, bei der in der Biegezugzone und der Biegedruckzone des Bauteils jeweils Lichtwellenleiter angeordnet sind, die mit einer Lichtquelle und einer Auswerteschaltung verbunden sind. Hierbei erstrecken sich die Lichtwellenleiter über die gesamte oder zumindest eine größere Länge des Bauwerksteils und sind in diesen eingebettet.

Aufgabe der Erfindung ist es, eine Vorrichtung zur Bestimmung der Biegebeanspruchung von Bauteilen der eingangs genannten Gattung so auszubilden, daß sie auch bei verhältnismäßig kleinen Bauteilen eingesetzt werden kann und somit einen Einsatz auch im Stahlbau ermöglicht.

Diese Aufgabe wird erfindungsgemäß gelöst durch eine Messeinrichtung gemäß Anspruch 1 sowie die Verwendung der Messeinrichtung gemäß Anspruch 6. Dabei ist es von Bedeutung, daß der Koppler in einer Längsbohrung des Bolzens angeordnet ist, wobei diese Längsbohrung zweckmäßigerweise zumindest an genähert in der neutralen Faser des Bolzens angeordnet ist. An dieser Stelle wird durch die Längsbohrung der geringste Verlust an Widerstandsgröße des Bolzens erreicht.

Die Erfindung ermöglicht bei sehr geringem Platzbedarf einen Einsatz der Vorrichtung bei den verhältnismäßig kleinen Bolzen, wobei auch über längere Zeiträume keine Nullpunkt'drift eintritt. Da jeder Lichtwellenleiter nur aus einer Meßfaser besteht, kann diese in einfacher und platzsparender Weise appliziert werden. Da bei einer Biegebeanspruchung gleichzeitig eine positive und negative Dehnung gemessen wird, ergibt sich eine hohe Meßgenauigkeit. Eine gesonderte Referenzmessung ist nicht erforderlich, da sich die Referenz aus der Nullwertmessung der Längendifferenz beider Meßfasern ergibt.

Vorzugsweise sind die beiden Lichtwellenleiter jeweils in einer Längsnut oder in einer Längsbohrung des Bolzens angeordnet. Beide Möglichkeiten lassen sich konstruktiv und fertigungstechnisch leicht realisieren, ohne daß dadurch die Kontur oder die Festigkeit des Bolzens wesentlich beeinträchtigt würde.

Die durch die Erfindung ermöglichte genaue Bestimmung der Biegebeanspruchung der Bolzen in den Gabelstücken der Zugstäbe ermöglicht es, die Vorspannung mit verhältrüsmäßig hoher Genauigkeit zu bestimmen und über beliebig lange Zeiträume und/oder in beliebigen Zeitabständen mit hoher Reproduzierbarkeit zu überwachen. Damit ist insbesondere auch eine Bauwerksüberwachung bei nachträglich eintretenden Senkungen oder bei außergewöhnlichen bzw. sich stark ändernden Belastungen mit hoher Genauigkeit möglich.

Nachfolgend wird ein Ausführungsbeispiel der Erfindung näher erläutert, das in der Zeichnung dargestellt ist. Es zeigt:
- Fig. 1: in schematischer Darstellungsweise einen in der unteren Hälfte im Schnitt dargestellten Bolzen sowie eine Vorrichtung zur Bestimmung der Biegebeanspruchung des Bolzens mit einer schematischen Darstellung der Auswerteschaltung,
- Fig. 2: eine Ansicht in Richtung des Pfeiles II in Fig. 1,
- Fig. 3: eine abgewandelte Ausführungsform des Bolzens,
- Fig. 4: eine Ansicht in Richtung des Pfeiles IV in Fig. 3 und
- Fig. 5: in schematischer Darstellungsweise ein Zugankersystem mit einer Vorrichtung zur Bestimmung der Biegebeanspruchung der Bolzen der Gabelstücke.

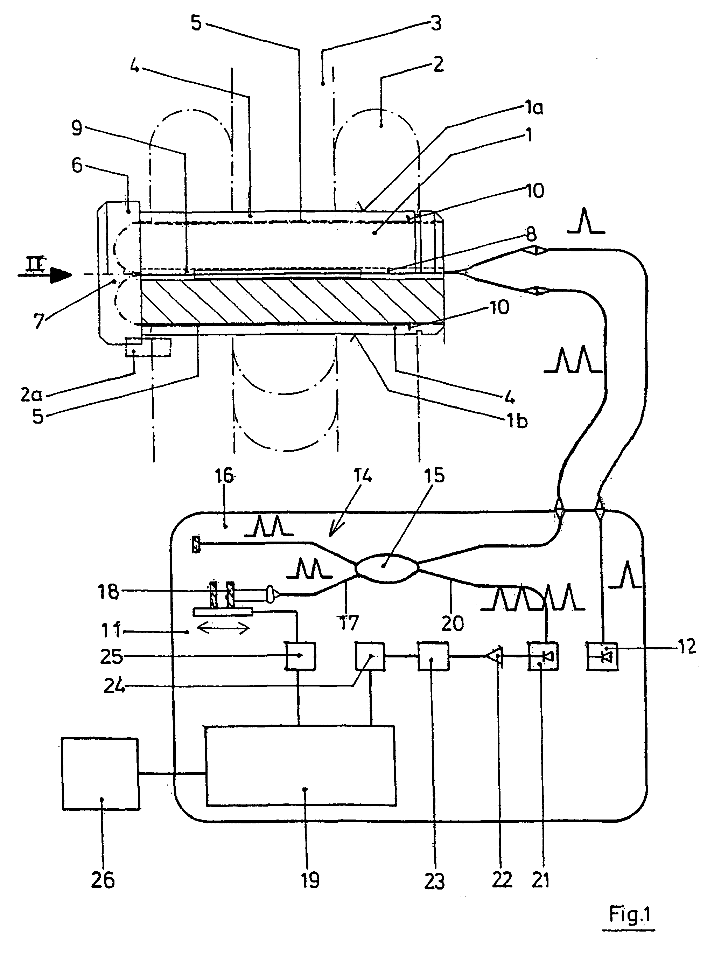

Ein im wesentlichen zylindrischer Bolzen 1 ist in Fig. 1 als Beispiel für ein Bauteil dargestellt, dessen Biegebeanspruchung bestimmt werden soll. Der Bolzen 1 ist beispielsweise quer in einem in Fig. 1 nur angedeuteten Gabelstück 2 angeordnet und stellt die Verbindung zu einer Lasche 3 dar.

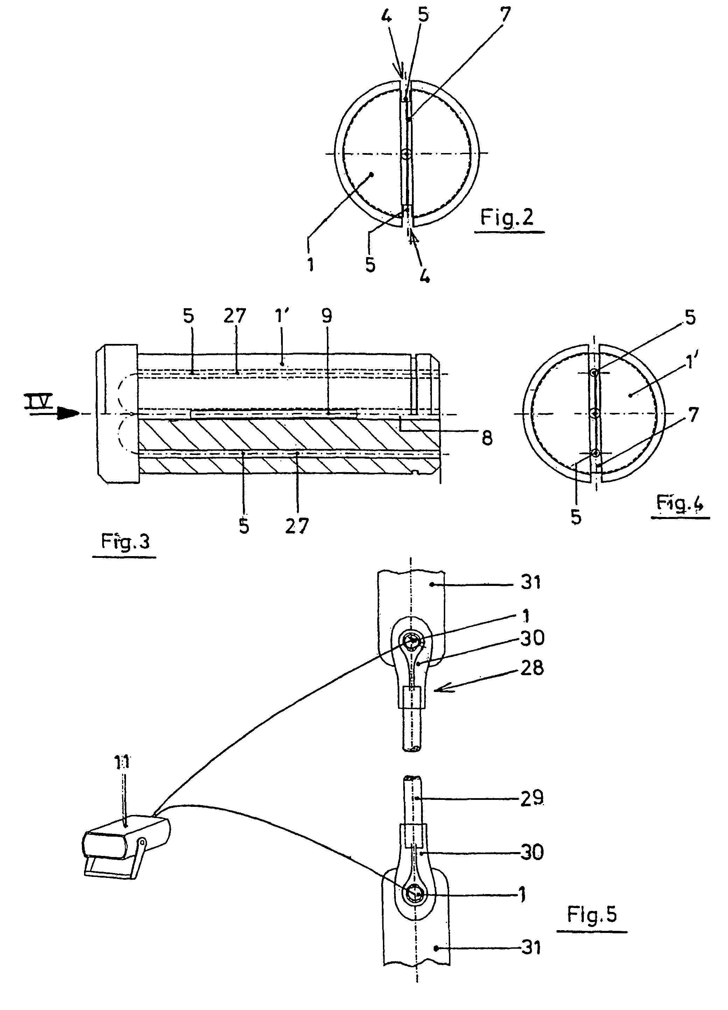

Bei dem in den Fig. 1 und 2 gezeigten Ausführungsbeispiel weist der Bolzen in seiner Biegezugzone 1a und in seiner Biegedruckzone 1b jeweils eine Längsnut 4 auf. In beide Längsnuten 4 ist jeweils ein Lichtwellenleiter 5 eingelegt und beispielsweise mit dem Nutgrund verklebt.

An seiner einen Stirnseite weist der Bolzen einen verdickten Bolzenkopf 6 auf, in dem eine Quernut 7 ausgespart ist. Die Quernut 7 verbindet die beiden Längsnuten 4 mit einer zentralen Längsbohrung 8, in der ein optischer Koppler 9 angeordnet ist. Jeweils ein Ende der beiden Lichtwellenleiter 5 ist über eine Schleife an den Koppler 9 angeschlossen. Jeweils am anderen Ende jedes Lichtwellenleiters 5 ist ein Spiegel 10 angeordnet. Ein am Gabelstück 2 eingesetzter Stift 2a greift in die Quernut 7 und sichert die Lage des Bolzens 1 so, daß die Längsnuten 4 in der Biegezone bzw. der Biegedruckzone bleiben.

In einer nur schematisch dargestellten Auswerteeinheit 11 ist eine Lichtquelle 12 angeordnet, beispielsweise eine lichtemittierende Diode, die über einen Lichtleiter 13 Licht an den Koppler 9 sendet. Dieser leitet das Licht an die beiden Lichtwellenleiter 5, das von den Spiegeln 10 in den Koppler 9 reflektiert wird. Dort werden beide Strahlen zusammengeführt und zu einem Analysator 14 in der Auswerteeinheit 11 geleitet. Der Analysator 14 weist einen Kuppler 15 auf, an den zwei Lichtwellenleiter 16, 17 angeschlossen sind. Ein mit dem einen Lichtwellenleiter 17 verbundener beweglicher Spiegel 18 wird durch eine Steuerungseinheit 19 verschoben. Das sich dabei ergebende Interferenzsignal wird über einen Lichtwellenleiter 20 einer Fotodiode 21 zugeführt, die über einen Verstärker 22, einen Filter 23 und einen Analog-Digital-Wandler 24 ein Signal an die Steuerungseinheit 19 liefert. In der Steuerungseinheit 19 wird aus dem Signal eines mit dem beweglichen Spiegel 18 verbundenen Weggebers 25 ermittelt, bei welcher Stellung des Spiegels 18 über die Fotodiode 21 eine Modulation des Signals festgestellt wird. Daraus wird in einem an die Steuerungseinheit 19 angeschlossenen Rechner 26 die Dehnung in den Lichtwellenleitern 5 und damit die Biegebeanspruchung des Bolzens 1 ermittelt. In Fig. 1 ist schematisch angedeutet, daß der Bolzen 1 durch einen in das Gabelstück 2 eingesetzten Zapfen 2a, der in die Quernut 7 eingreift, in seiner vorgegebenen Stellung gesichert werden kann. Dadurch ist sichergestellt, daß die beiden Längsnuten 4 jeweils genau in der Biegezugzone bzw. in der Biegedruckzone liegen und diese Stellung auch beibehalten.

Der in den Fig. 3 und 4 dargestellte Bolzen 1' unterscheidet sich von dem Bolzen 1 nach den Fig. 1 und 2 nur dadurch, daß die beiden Lichtwellenleiter 5 jeweils in einer Längsbohrung 27 des Bolzens 1' angeordnet sind, die sich in der Biegezugzone bzw. der Biegedruckzone befinden. Auch hierbei ist in der Stirnseite eine die beiden Längsbohrungen 5 mit der zentralen Längsbohrung 8 verbindende Quernut 7 ausgespart.

Fig. 5 zeigt die Anwendung zur Bestimmung und/oder Überwachung der Beanspruchung eines Zugstabsystems 28 im Bauwesen, insbesondere im Stahlbau. Hierbei ist nur ein einzelner Zugstab 29 dargestellt, dessen Enden jeweils mit einem Gabelstück 30 verschraubt sind. Jedes Gabelstück 30 ist über einen Bolzen 1 mit einer Lasche 31 oder einem anderen anschließenden Bauteil verbunden.

Einer der Bolzen 1 oder - wie in Fig. 5 angedeutet - beide Bolzen 1 sind in der vorher beschriebenen Weise mit einer Auswerteeinheit 11 verbunden, in der die Biegebeanspruchung der Bolzen 1 ermittelt wird.

Zu Beginn der Messung wird zunächst der unbelastete Bolzen 1 bzw. 1' gemessen, um eine Nullwertaufnahme zu erhalten. Durch die Belastung des Zugstabsystems wird der Bolzen 1 auf Biegung beansprucht. Die Lichtwellenleiter 5 liegen in gleichem Abstand zur Bolzenachse in der Biegezugzone und der Biegedruckzone des Bolzens 1. Die resultierende Dehnung (positiv und negativ) wird durch die Lichtwellenleiter reproduzierbar in Form der Längenänderung gemessen. Diese Längenänderung ist bis zur vollen Beanspruchungskapazität des Zugstabsystems linear und kann somit in ein direktes Verhältnis zur Beanspruchung gesetzt werden. In Versuchen ergab sich, daß sogar in einem Meßbereich von 0,1 mm bei 100% Traglast (doppelter Wert durch die Addition von Zug und Druck) eine Hystereseschleife reproduzierbar gemessen werden kann.

Grundsätzlich sind zwei unterschiedliche Verfahrensweisen denkbar. Zum einen ist eine Überwachung von Standardsystemen durch den Vergleich mit zuvor ermittelten Kurven gleicher Zugstabsysteme möglich. Zum anderen kann eine Überwachung von geometrisch erstmalig im Einsatz befindlichen Zugstabsystemen erfolgen. Hierfür werden zwei Punkte für die lineare Abhängigkeit benötigt. Der erste Punkt ist der Wert des unbelasteten Bolzens. Der zweite Wert kann entweder durch einen Vorversuch ermittelt werden, bei dem der Bolzen in einer Zugmaschine eingesetzt wird, oder durch eine zusätzlich bei der Montage am Zugstab 29 angebrachte Feinmeß-Dehnungseinrichtung. In diesem Fall kann beim Vorspannen während der Montage auf einen beliebigen Wert die Biegebeanspruchung in Relation zur Systembeanspruchung gebracht werden und man erhält so den benötigten zweiten Referenzpunkt ohne vorherige Versuche.

## Patentansprüche

1. Meßeinrichtung zur Bestimmung einer Biegebeanspruchung, umfassend: Einen auf Biegung beanspruchbaren und mit Lichtwellenleitern versehenen Bolzen (1, 1'), der mit einem als Zugstab ausgebildeten Bauteil (29) verbindbar ist, eine Lichtquelle (12), einen optischen Koppler (9) und eine Auswerteschaltung (14), wobei
- in der Biegezugzone und in der Biegedruckzone des Bolzens (1, 1') jeweils ein Lichtwellenleiter (5) appliziert ist und beide Lichtwellenleiter über den Koppler (9) mit der Lichtquelle (12) und mit der Auswerteschaltung (14) verbunden sind,
- die Auswerteschaltung (14) derart ausgestaltet ist, daß sie die bei einer Biegebeanspruchung des Bolzens auftretenden Längenänderungen der beiden Lichtwellenleiter (5) nach dem Prinzip der Interferometrie ermittelt, und
- der Koppler (9) in einer Längsbohrung (8) des Bolzens angeordnet ist.

2. Vorrichtung nach Anspruch 1,
**dadurch gekennzeichnet, daß** die beiden Lichtwellenleiter (5) jeweils in einer Längsnut (4) des Bolzens (1) angeordnet sind.

3. Vorrichtung nach Anspruch 1,
**dadurch gekennzeichnet, daß** die beiden Lichtwellenleiter (5) jeweils in einer Längsbohrung (27) des Bolzens (1') angeordnet sind.

4. Vorrichtung nach Anspruch 1,
**dadurch gekennzeichnet**, däß die den Koppler (9) aufnehmende Längsbohrung (8) zumindest angenähert in der neutralen Faser des Bolzens (1, 1') angeordnet ist.

5. Vorrichtung nach Anspruch 1 oder 4,
**dadurch gekennzeichnet, daß** der Bolzen im wesentlichen zylindrisch ist und in seiner Stirnseite eine die beiden Längsnuten (4) bzw. die beiden Längsbohrungen (27) mit der den Koppler (9) aufnehmenden zentralen Längsbohrung (8) verbindende Quernut (7) aufweist.

6. Verwendung einer Messeinrichtung gemäß einem oder mehreren der Ansprüche 1 bis 5 zur Bestimmung und/oder Überwachung von Zugstabsystemen im Bauwesen, insbesondere im Stahlbau, wobei jedes Zugstabsystem mindestens ein mit dem Zugstab (29) verbundenes Gabelstück (30) mit dem auf Biegung beanspruchten Bolzen (1,1') aufweist.

## Claims

1. Measuring device for determining bending load, comprising: a bolt (1, 1'), that can be stressed by flexure, and provided with light-wave conductors, that can be connected with a component part (29) that is developed as a tensile bar, a light source (12), an optic coupler (9) and an evaluation circuit (14), whereby
- a light-wave conductor (5) is in each case applied in the tensile-bending zone and in the bending pressure zone, and both light-wave conductors are connected, by means of the coupler (9), to the light source (12) and to the evaluation circuit (14),
- the evaluation circuit (14) is developed such that it determines the changes in length of the two light source conductors (5), when bending loading is applied to the bolt, on the basis of interferometry, and
- the coupler (9) is disposed in a longitudinal bore (8) of the bolt.

2. Device in accordance with claim 1,
**characterized in that**
the two light-wave conductors (5) are in each case disposed in a longitudinal groove (4) of the bolt (1).

3. Device in accordance with claim 1,
**characterized in that** the two light-wave conductors (5) are in each case disposed
in a longitudinal bore (27) of the bolt (1').

4. Device in accordance with claim 1,
**characterized in that** the longitudinal bore (8) that takes up the coupler (9) is disposed at least approximately in the neutral axis of the bolt (1, 1').

5. Device in accordance with claim 1 or 4,
**characterized in that** the bolt (1) is substantially cylindrical and has a transverse groove (7) connecting the two longitudinal grooves (4) or the two longitudinal bores (27) to the central longitudinal bore (8) that takes up the coupler (9).

6. Use of a measuring device in accordance with one or more of claims 1 to 5 for determining and/or monitoring tensile bar systems in construction engineering, particularly with regard to steel construction, whereby each tensile bar system has at least one end piece fork (30), connected to the tensile bar (29), with the bolt (1, 1') with flexure applied to it.

## Revendications

1. Dispositif pour déterminer une contrainte de flexion, comportant : un boulon (1, 1') pouvant subir une contrainte de flexion et pourvu de guides d'ondes lumineuses, qui est raccordable à un élément constitutif (29) configuré sous forme de tige de traction, une source lumineuse (12), un coupleur optique (9) et une commutation d'évaluation (14), moyennant quoi
- un guide d'ondes lumineuses (5) est appliqué dans chacune des zones de traction de flexion et de pression de flexion du boulon (1, 1') et les deux guides d'ondes lumineuses sont raccordés par l'intermédiaire du coupleur (9) à la source lumineuse (12) et à la commutation d'évaluation (14),
- la commutation d'évaluation (14) est configurée de telle sorte qu'elle mesure les différences de longueur des deux guides d'ondes lumineuses (5) survenant lors d'une contrainte de flexion du boulon selon le principe de l'interférométrie, et
- le coupleur (9) est disposé dans un alésage longitudinal (8) du boulon.

2. Dispositif selon la revendication 1, **caractérisé en ce que** les deux guides d'ondes lumineuses (5) sont chacun disposés dans une rainure longitudinale (4) du boulon (1).

3. Dispositif selon la revendication 1, **caractérisé en ce que** les deux guides d'ondes lumineuses (5) sont chacun disposés dans un alésage longitudinal (4) du boulon (1').

4. Dispositif selon la revendication 1, **caractérisé en ce que** l'alésage longitudinal (8) logeant le coupleur (9) est disposé au moins à proximité du faisceau neutre du boulon (1, 1').

5. Dispositif selon la revendication 1 ou 4, **caractérisé en ce que** le boulon (1) est pour l'essentiel cylindrique et comporte sur sa partie frontale une rainure transversale (7) reliant les deux rainures longitudinales (4) et/ou les deux alésages longitudinaux (27) avec l'alésage longitudinal central (8) logeant le coupleur (9).

6. Utilisation d'un dispositif de détermination selon une ou plusieurs des revendications 1 à 5 pour déterminer et/ou surveiller des systèmes de tiges de traction dans le bâtiment, en particulier dans la construction métallique, moyennant quoi chaque système de tiges de traction comporte au moins un élément en fourche (30) raccordé à la tige de traction (29) avec le boulon (1, 1') contraint par flexion.
